# EUROPÄISCHE PATENTANMELDUNG

(11) **EP 1 748 449 A1**
(43) Veröffentlichungstag der Anmeldung: **31.01.2007**
(21) Anmeldenummer: 05016096.9
(22) Anmeldetag: 25.07.2005
(51) Int. Cl.: H01B 17/50, H01B 19/04, H01B 3/44, H01M 8/24

(54) **Isolator mit erhöhter Isolationsfähigkeit**

(71) Anmelder: SIEMENS AKTIENGESELLSCHAFT, 80333 München (DE)
(72) Erfinder: Hartnack, Herbert, 91056 Erlangen (DE); Mehltretter, Igor, 91054 Buckenhof (DE)

(57) **Zusammenfassung**

Beim Einsatz eines Isolators (1) in einer feuchten Atmosphäre kondensiert bei Abkühlung der Atmosphäre die Feuchtigkeit aus und schlägt sich auf die Oberfläche des Isolators (1) nieder. Die sich durch die niederschlagende Feuchtigkeit bildenden Wassertropfen verbinden sich zu einem Wasserfilm, der den Isolationswiderstand des Isolators (1) erheblich reduziert.

Zur Lösung dieses Problems schlägt die Erfindung vor, dass der Isolator (1) zumindest teilweise eine hydrophobe Oberfläche (6) aufweist. Hierdurch wird bewirkt, dass die kondensierten Wassertropfen von der Oberfläche des Isolators abtropfen oder vereinzelt, ohne Verbindung, bleiben. Die kondensierten Wassertropfen können sich somit nicht zu einem durchgehenden Wasserfilm verbinden, wodurch ein gewünschter hoher Isolationswiderstand beibehalten werden kann.

## Beschreibung

Die Erfindung betrifft einen Isolator mit erhöhter Isolationsfähigkeit gemäß Patentanspruch 1.

Isolatoren werden üblicherweise zur Befestigung, Halterung oder Lagerung erster, strom- bzw. spannungsführender Bauteile an bzw. in zweiten Bauteilen wie z.B. Gehäusen, Gerüsten, Trägern etc. verwendet, wenn ein Stromfluss zwischen dem ersten, strom- bzw. spannungsführenden Bauteil und dem zweiten Bauteil verhindert werden soll.

Oftmals muss hierbei aus Sicherheitsgründen ein definierter Isolationswiderstand des Isolators gewährleistet werden. Beispielsweise muss bei einem in einem Gehäuse oder Behälter gelagerten elektrischen Gerät, z.B. bei einem in einem Druckbehälter gelagerten Brennstoffzellenmodul, ein hoher Isolationswiderstand zwischen dem Gehäuse oder Behälter und den elektrischen Anschlüssen des Gerätes sichergestellt werden. Die elektrisch leitenden Teile des Gerätes werden deshalb zur Befestigung, Halterung oder Lagerung über Isolatoren mit dem Gehäuse oder Behälter verbunden. Bei manchen Anlagen bzw. Geräten wird der Isolationswiderstand zwischen dem Gehäuse oder Behälter und den elektrischen Anschlüssen permanent überwacht und bei Unterschreitung eines Grenzwertes die Anlage bzw. das Gerät abgeschaltet.

Wenn sich Isolatoren in einer Umgebung mit einem Temperaturwechsel von heiss nach kalt befinden, kondensiert bei Abkühlung der Umgebung in der Umgebungsatmosphäre befindliche Feuchtigkeit aus und schlägt sich auf den Isolatoren nieder. Die niederschlagende Feuchtigkeit bildet auf den Isolatoren Wassertropfen, die sich zu einem die Oberfläche benetzenden Wasserfilm verbinden. Hierdurch entstehen elektrisch leitende Wasserbrücken über den Isolationsstrecken, d.h. entlang der Oberflächen der Isolatoren zwischen den zu isolierenden Bauteilen, wodurch sich der Isolationswiderstand beispielsweise um einen Faktor von 10 oder mehr reduzieren kann.

Aus Sicherheitsgründen werden deshalb die Isolationsstrecken meist so lange ausgeführt, dass die Wasserstrecken keine erhebliche Reduktion des Isolationswiderstandes bewirken.

Weitere Maßnahmen zur Verhinderung zu geringer Isolationswiderstände bestehen darin, ein Auskondensieren von Feuchtigkeit durch Trocknen der Atmosphäre mit Hilfe einer Trocknungseinrichtung zu verhindern oder einen Betrieb des Gerätes im kalten Zustand nicht zu erlauben.

Ausgehend hiervon ist es Aufgabe vorliegender Erfindung, einen Isolator anzugeben, der auch bei einem Einsatz unter wechselnden Umgebungstemperaturen einen hohen Isolationswiderstand gewährleistet, ohne dass die Isolationsstrecken vergrößert, zusätzliche Trocknungseinrichtungen vorgesehen oder Betriebseinschränkungen vorgenommen werden müssen.

Die Lösung dieser Aufgabe gelingt erfindungsgemäß mit einem Isolator gemäß Patentanspruch 1. Vorteilhafte Ausgestaltungen sind Gegenstand der Unteransprüche 1 bis 8. Vorteilhafte Verwendungen des Isolators sind Gegenstand der Ansprüche 9 bis 11.

Die hydrophobe Oberfläche des Isolators bewirkt, dass die kondensierten Wassertropfen entweder von der Oberfläche des Isolators abtropfen oder, wenn sie nicht abtropfen, dann nur vereinzelt auf der Oberfläche ohne Verbindung zu anderen Wassertropfen verbleiben. Ein durchgehender Wasserfilm und somit eine Reduzierung des Isolationswiderstand kann somit sicher verhindert werden. Hierdurch kann ein hoher Isolationswiderstand auch bei einer Abkühlung des Gerätes und damit verbundener Kondensation der Feuchtigkeit beibehalten werden. Es können somit kurze Isolationsstrecken realisiert werden. Auf eine Trocknung der Atmosphäre oder eine Sicherheitsabschaltung bei Abkühlung kann verzichtet werden.

Gemäß einer vorteilhaften Ausgestaltung der Erfindung besteht der Isolator aus einem isolierenden, vorzugsweise nicht hydrophoben, Material mit einer hydrophoben Oberflächenbeschichtung. Da nur die Oberflächenbeschaffenheit wesentlich für den gewünschten Effekt ist, muss nicht der gesamte Isolator aus einem hydrophoben Material bestehen, vielmehr kann für den Isolator ein z.B. hinsichtlich seiner mechanischen und isolierenden Eigenschaften optimales und hinsichtlich seiner hydrophoben Eigenschaften weniger optimales Material (z.B. Keramik, Kunststoff) gewählt werden, das an seiner Oberfläche mit einem hinsichtlich der hydrophoben Eigenschaften optimalen Material beschichtet ist.

Bevorzugt enthält die Oberflächenbeschichtung Polytetrafluorethylen (PTFE) als hydrophobes Material. Dieses Material zeichnet sich durch gute Haftbarkeit auf typischen Isolatormaterialien wie Keramiken oder Kunststoffen und gleichzeitig guten Isolationswiderstand aus. Polytetrafluorethylen kann zudem in Form einer Suspension einfach auf den Isolatorkern aufgestrichen werden und erzeugt nach dem Trocknen eine dünne Oberflächenschicht.

In einer weiteren vorteilhaften Ausgestaltung der Erfindung besteht die hydrophobe Oberflächenbeschichtung aus einem in einem Lösemittel lösbaren hydrophobierenden Material. Ein derartiges Material kann in gelöstem Zustand, z.B. durch Aufstreichen, sehr einfach auf den Isolatorkern aufgebracht werden und ermöglicht die Herstellung besonders dünner Oberflächenbeschichtungen.

Bevorzugt besteht das lösbare, hydrophobe Material ganz oder teilweise aus einem amorphen Fluoropolymer. Alternativ eignen sich auch Polisiloxanverbindungen oder Alkylsilane. Diese Materialien weisen gleichzeitig einen guten Isolationswiderstand und eine gute Haftbarkeit auf verschiedensten Isolatormaterialen auf. Gegebenenfalls ist vor der Beschichtung nur eine entsprechende Oberflächenbehandlung durchzuführen.

Unter den amorphen Fluoropolymeren eignen sich insbesondere amorphe Modifikationen von Teflon. Diese Materialien können in geeigneten Lösungsmitteln bezogen und vor Gebrauch auf eine optimale Konzentration verdünnt werden. Die Lösung kann dann durch ein übliches Aufbringverfahren wie Sprühen, Wischen, Pinseln, Tauchen, Drucken auf das isolierende, nicht hydrophobe Material aufgebracht, das Lösungsmittel verdampft und das verbleibende hydrophobe Material ggf. durch einen Temperaturschritt bei erhöhter Temperatur auf der Korrosionsschutzschicht immobilisiert werden. Nach dem Verdampfen des Lösungsmittels bleibt ein sehr dünner Teflonfilm auf der Oberfläche des Isolators zurück.

Der erfindungsgemäße Isolator eignet sich grundsätzlich sehr gut zur (isolierten) Lagerung eines elektrischen Bauteiles in einem Gehäuse. Beispiele hierfür sind gekapselte Elektromotoren, Leistungsschalter, Leistungssteller oder Trocken-Transformatoren. Insbesondere eignet er sich jedoch für die Lagerung elektrischer Bauteile in einem Gehäuse, das mit feuchten Gasen bis hin zur Taupunktsgrenze gefüllt ist. Dies ist zum Beispiel der Fall bei einem Brennstoffzellenmodul, das in einem Druckbehälter gelagert wird.

Weiterhin eignet sich der erfindungsgemäße Isolator zur (isolierten) Befestigung oder Halterung eines ersten elektrisch leitfähigen Bauteiles an einem zweiten Bauteil

Die Erfindung sowie weitere vorteilhafte Ausgestaltungen der Erfindung gemäß Merkmalen der Unteransprüche werden im Folgenden anhand von Ausführungsbeispielen in den Figuren näher erläutert. Es zeigen:
- FIG 1: einen Schnitt durch ein Brennstoffzellenmodul mit erfindungsgemäßen Isolatoren,
- FIG 2: einen der Isolatoren von FIG 1 in vergrößerter Darstellung,
- FIG 3: die Verwendung eines erfindungsgemäßen Isolators zur gegenseitigen Abstützung zweier stromführender Leiter und
- FIG 4: die Verwendung erfindungsgemäßer Isolatoren zur Befestigung von elektrischen Freileitungen.

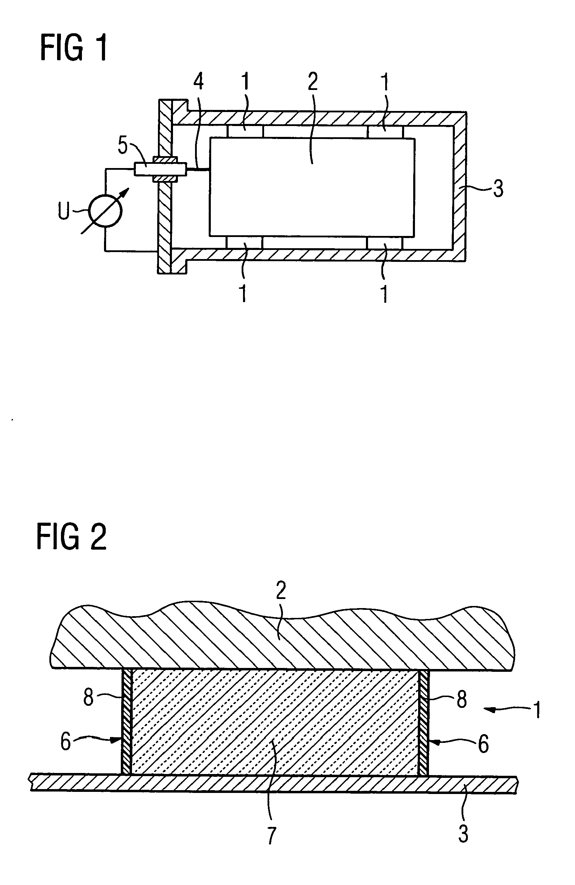

FIG 1 zeigt in vereinfachter Darstellung einen Schnitt durch eine Anordnung bestehend aus einem Brennstoffzellenmodul 2, welches mittels Isolatoren 1 in einem Druckbehälter 3 gelagert ist. Der Druckbehälter 3 umschließt das Brennstoffzellenmodul gas- und wasserdicht und dient zum Schutz des Brennstoffzellenmoduls 2 vor mechanischen Beschädigungen und/oder von Umwelteinflüssen und zur Verhinderung des Austretens von Betriebsgasen aus dem Brennstoffzellenmodul an die umgebende Atmosphäre. Ein Stromanschluss 4 ist über einen Durchführungskondensator 5 aus dem Druckbehälter 3 geführt. Aus Sicherheitsgründen muss ein hoher Isolationswiderstand (üblicherweise 10 MΩ) zwischen dem Druckbehälter 3 und dem elektrischen Anschluss 5 vorliegen. Dieser Isolationswiderstand wird beim Betrieb des Brennstoffzellenmoduls in einer Brennstoffzellenanlage mit Hilfe einer Messspannungsquelle U permanent überwacht und bei Unterschreitung eines Grenzwertes die Brennstoffzellenanlage abgeschaltet.

Beim Betrieb des Brennstoffzellenmoduls 2 wird aus Wasserstoff und Sauerstoff elektrische Energie, Wärme und reines Wasser erzeugt. Im Betrieb ist deshalb das Brennstoffzellenmodul 2 und die umgebende Atmosphäre im Druckbehälter 3 warm und feucht. Nach Abschaltung des Brennstoffzellenmoduls 2 kühlt das Brennstoffzellenmodul und damit auch die umgebende Atmosphäre im Druckbehälter 3 ab, die in der Atmosphäre befindliche Feuchtigkeit kondensiert aus und schlägt sich auf den Oberflächen der Isolatoren 1 nieder. Die niederschlagende Feuchtigkeit bildet auf diesen Oberflächen Wassertropfen, die sich zu einem die Oberfläche benetzenden Wasserfilm verbinden, der den Isolationswiderstand der Isolatoren 1 auf 1 MΩ oder weniger senken würde.

Um dies zu verhindern weist jeder der Isolatoren 1, wie in FIG 2 im Detail dargestellt, an den Berührungsstellen mit der Druckbehälteratmosphäre eine hydrophobe Oberfläche 6 auf.

Der Isolator 1 weist hierzu einen Kern 7 aus einem isolierenden, vorzugsweise nicht hydrophoben Material, z.B. aus einem Kunststoff oder Keramikmaterial, auf, der eine hydrophobe Oberflächenbeschichtung 8 aufweist. Die hydrophobe Oberflächenbeschichtung 8 besteht vorzugsweise ganz oder teilweise aus einem in einem Lösemittel lösbaren, hydrophoben Material. Bevorzugt besteht dieses Material aus einem amorphen Fluoropolymer, insbesondere einer amorphen Modifikation von Teflon (beispielsweise einem amorphen Copolymer aus 65 - 99 Mol % Perfluoro-2,2-Dimethyl-1,3-Dioxol mit einer Komplementärmenge von Tetrafluorethylen, von DuPont Fluoroproducts unter dem Produktnamen Teflon®AF erhältlich).

Alternativ besteht die Oberflächenbeschichtung 8 aus einer Polysiloxanverbindung oder aus Alkylsilanen, insbesondere Alkyl-Aryl-Silanen oder Halogen-Alkyl-Aryl-Silanen.

Die Oberflächenbeschichtung 8 bewirkt, dass die kondensierten Wassertropfen sich nicht zu einem durchgehenden Wasserfilm verbinden, sondern abtropfen oder vereinzelt ohne Verbindung bleiben. Es kann somit auch bei Abkühlung des Brennstoffzellenmoduls 2 und Kondensation der Feuchtigkeit der Atmosphäre in dem Druckbehälter 3 der gewünschte hohe Isolationswiderstand zwischen dem Druckbehälter 3 und den elektrischen Anschlüssen 5 beibehalten werden. Eine Trocknung der Atmosphäre in dem Druckbehälter 3 oder eine Sicherheitsabschaltung des Brennstoffzellenmoduls 2 bei Abkühlung ist somit nicht erforderlich.

Für die Wirksamkeit der hydrophoben Oberflächenbeschichtung kann eine Dicke der Oberflächenbeschichtung im Bereich von Nanometern bis Mikrometern ausreichend sein. Beispielsweise können mit PTFE-Suspension geeignete Schichtdicken im Mikrometerbereich und mit amorphem Teflon sogar geeignete Schichtdicken im Nanometerbereich erreicht werden. Die Dicke muss nur so gewählt sein, dass sie ausreichend wasserabstoßend ist und im zu schützenden Bereich ohne Unterbrechungen aufgebracht wird. Die Wirksamkeit der Beschichtung kann dann einfach durch Benetzung mit reinem Wasser visuell überprüft werden.

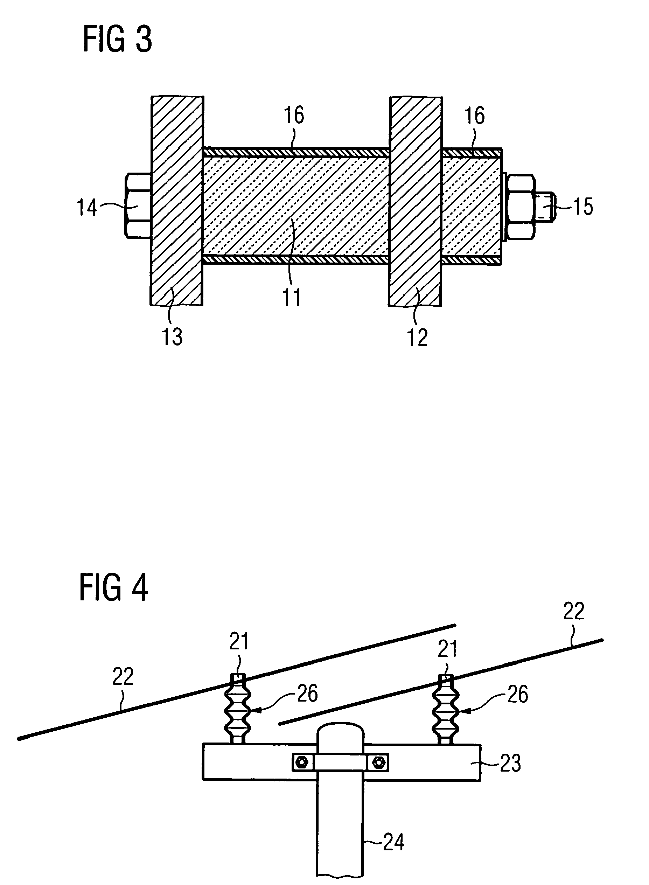

FIG 3 zeigt die Verwendung erfindungsgemäßer Isolatoren 11 mit hydrophoben Oberflächen 16 zur Befestigung und gegenseitigen Abstützung zweier elektrischen Leiter 12, 13. Die beiden Leiter 12, 13 und die Isolatoren 11 werden hierbei mittels einer Schraubverbindung 14, 15 aufeinander gepresst.

FIG 4 zeigt eine Halterung von elektrischen Freileitungen 22 mittels Isolatoren 21 mit hydrophoben Oberflächen 26 an einem Querträger 23 eines Dachständers 24.

## Patentansprüche

1. Isolator (1) mit erhöhter Isolationsfähigkeit
**dadurch gekennzeichnet, dass** der Isolator (1) zumindest teilweise eine hydrophobe Oberfläche (6) aufweist.

2. Isolator (1) nach Anspruch 1,
**dadurch gekennzeichnet, dass** der Isolator (1) aus einem isolierenden, vorzugsweise nicht hydrophoben, Material mit einer hydrophoben Oberflächenbeschichtung (8) besteht.

3. Isolator (1) nach Anspruch 2,
**dadurch gekennzeichnet, dass** die hydrophobe Oberflächenbeschichtung (8) Polytetrafluorethylen (PTFE) enthält.

4. Isolator (1) nach Anspruch 2,
**dadurch gekennzeichnet, dass** die hydrophobe Oberflächenbeschichtung (8) aus einem in einem Lösemittel lösbaren, hydrophoben Material besteht.

5. Isolator (1) nach Anspruch 4,
**dadurch gekennzeichnet, dass** das hydrophobe Material ganz oder teilweise aus einem amorphen Fluoropolymer besteht.

6. Isolator (1) nach Anspruch 5,
**dadurch gekennzeichnet, dass** das amorphe Fluoropolymer eine amorphe Modifikation von Teflon ist.

7. Isolator (1) nach Anspruch 4,
**dadurch gekennzeichnet, dass** das hydrophobe Material ganz oder teilweise aus einer Polisiloxanverbindung oder aus Alkylsilanen besteht.

8. Isolator (1) nach einem der Ansprüche 4 bis 7,
**dadurch gekennzeichnet, dass** die hydrophobe Oberflächenbeschichtung (45) eine Dicke im Bereich von Nanometern bis Mikrometern aufweist.

9. Verwendung des Isolators (1) nach einem der Ansprüche 1 bis 8 zur Lagerung eines elektrischen Bauteiles (2) in einem Gehäuse (3), insbesondere einem Gehäuse, das mit feuchten Gasen bis hin zur Taupunktsgrenze gefüllt ist.

10. Verwendung des Isolators (1) nach einem der Ansprüche 1 bis 8 zur Befestigung eines ersten elektrisch leitfähigen Bauteiles (12) an einem zweiten Bauteil (13).

11. Verwendung des Isolators (1) nach einem der Ansprüche 1 bis 8 zur Halterung eines ersten elektrisch leitfähigen Bauteiles (22) an einem zweiten Bauteil (23).
